# EUROPEAN PATENT APPLICATION

(11) **EP 4 474 089 A1**
(43) Date of publication of application: **11.12.2024**
(21) Application number: 24179862.8
(22) Date of filing: 04.06.2024
(51) Int. Cl.: B23D 45/16, B27B 5/38, B27B 9/00

(54) **CUT-OFF SAW**

(30) Priority: 09.06.2023 US 202318207851
(71) Applicant: Robert Bosch GmbH, 70442 Stuttgart (DE)
(72) Inventor: Tam, Ramon, Buffalo Grove, IL, 60089 (US); Hill, Maximillian, Skokie, IL, 60076 (US); Monteverde, Richard, Chicago, IL, 60630 (US); Burdick, Mitch, Des Plaines, IL, 60016 (US)
(74) Representative: Isarpatent

(57) **Abstract**

A cut-off saw includes a saw housing (2) having a support arm (10) that protrudes outward from the housing front end (3). A blade drive assembly (200) disposed in the support arm (10) includes a gear set (222) and is configured to transmit rotational motion of a motor (101) to the cutting blade (90). A lock handle (284) is pivotably mounted on an outer surface (102) of the support arm (10) and is configured to actuate a locking pin (294). In a folded position, the lock handle (284) is configured so that the locking pin (294) is disengaged from a drive gear whereby the blade drive assembly (200) free to drive the cutting blade (90). In the unfolded position, the lock handle (284) is configured to cam the locking pin (294) into engagement with the drive gear, preventing rotation of the cutting blade (90). The unfolded lock handle (284) serves as a manual grip that permits a user to stabilize the saw while attaching and detaching a cutting blade (90).

## Description

### BACKGROUND

A cut-off saw is a hand-held power tool that employs a circular blade that is mounted on a support arm that protrudes from the front of the saw housing. A cut-off saw is free of a lower blade guard and often drives a cutting blade having a diameter that is in a range of eight to fourteen inches. This type of saw is designed to be a versatile solution for cutting a large variety of heavy materials, including reinforced concrete, other masonry materials, and metals including iron and black pipe. In some saws of this type, it may be challenging to mount or change saw blades to the support arm since doing so requires using one hand to prevent drive shaft rotation while using the other and to mount and secure the blade to the support arm. It is desirable to have a cut-off saw in which blade attachment and detachment to the saw is simplified.

### SUMMARY

A cut-off saw includes a saw housing, a brushless electric motor disposed within the saw housing, and a battery pack coupled to the saw housing that provides power to the motor and a printed circuit board assembly (PCBA). The cut-off saw further includes a blade drive assembly disposed in a support arm that protrudes from a front end of the saw housing. The blade drive assembly couples a cutting blade to the cut-off saw and transmits the rotational output of the motor to the cutting blade. The saw housing includes a rear handle that extends from a rear end of the saw housing. In addition, an auxiliary handle overlies an upper side of the saw housing. The battery pack is disposed in a battery compartment defined by the saw housing. The battery compartment is positioned between the motor and the rear handle, and the battery pack is accessible via a battery cover that is detachably coupled to the saw housing.

The support arm of the saw housing encloses a blade drive assembly. The blade drive assembly is a belt-free, direct-drive system that includes several subassemblies that cooperate to transmit the rotational output of the electric motor to the cutting blade. For example, an intermediate drive subassembly is mechanically connected to the electric motor and transmits the rotational motion of the motor to a gear set subassembly. The gear set subassembly connects the intermediate drive assembly to a blade connection assembly and reduces the rotational speed of the motor output shaft. The fourth subassembly is a spindle lock assembly that is operable to selectively engage with the gear set to prevent movement of the gear set during attachment and detachment of the cutting blade. The spindle lock assembly includes a cammed lock handle that is movable between a folded position in which the gear set is unlocked and able to freely rotate, and an unfolded position in which the gear set is locked and prevented from motion. In the unfolded position, the lock handle serves as a user handle.

In some aspects, a saw includes a saw housing. The saw housing has a front end, a rear end opposite the front end and a hollow support arm that protrudes outward from the front end. The support arm includes a proximal end that adjoins the front end and a distal end that is opposite the proximal end. The saw includes an electric motor disposed in the saw housing. The electric motor has an output shaft that is rotatable about an output shaft axis. The saw includes a battery pack that is disposed in the saw housing. The battery pack is configured to supply power to the electric motor. In addition, the saw includes a blade drive assembly disposed in the support arm. The blade drive assembly is configured to detachably connect a cutting blade to the distal end of the support arm and transmit a rotational motion of the output shaft to the cutting blade when the cutting blade is connected to the saw. The blade drive assembly includes a spindle that is connected to the output shaft and is rotatable about a spindle axis. The spindle has a spindle first end that is supported for rotation by the support arm and a spindle second end that protrudes outward from the support arm. The blade drive assembly includes a transmission that connects the output shaft to the spindle and a blade connection subassembly disposed on the spindle second end. The blade connection subassembly is configured to detachably secure a cutting blade to the spindle second end. The blade drive assembly includes a lock handle that overlies an outer surface of the support arm. The lock handle includes a handle first end, a handle second end opposite the handle first end, and a handle longitudinal axis that extends between the handle first end and the handle second end. The lock handle is connected to the support arm via a pivot pin that is disposed closer to the handle second end than the handle first end. In addition, the blade drive assembly includes a locking pin that is disposed within an opening of the support arm. The locking pin is translatable within the opening relative to the support arm. The locking pin includes a pin first end that directly contacts the lock handle and a pin second end that faces a rotatable element of the transmission. The lock handle is rotatable about the pivot pin relative to the support arm between a first position in which the handle longitudinal axis is at a first angle relative to the support arm outer surface and a second position in which the handle longitudinal axis is at a second angle relative to the support arm outer surface. The second angle is greater than the first angle. The locking pin is driven by the lock handle to translate relative to the support arm upon rotation of the lock handle about the pivot pin. When the lock handle is in the first position, the pin second end is spaced apart from the rotatable element of the transmission such that the rotatable element of the transmission is free to rotate, and when the lock handle is in the second position, the pin second end engages with the rotatable element of the transmission such that the rotatable element of the transmission is prevented from rotating.

In some embodiments, the saw includes a spring that surrounds the locking pin and biases the locking pin against the lock handle.

In some embodiments, the lock handle second end defines a curved cam surface.

In some embodiments, the locking pin is biased against the lock handle via an elastic member such that the locking pin first end directly contacts the cam surface.

In some embodiments, the cam surface is shaped so that when the lock handle is in the first position, the pin second end is spaced apart from the rotatable element of the transmission, and when the lock handle is in the second position, the pin second end is engaged with the rotatable element of the transmission.

In some embodiments, the locking pin is movable along a locking pin axis that is perpendicular to a rotational axis of the pivot pin.

In some embodiments, a curved ridge protrudes from an outer surface of the support arm, the ridge partially surrounding the lock handle.

In some embodiments, when the lock handle is in the first position, a surface of the lock handle that faces away from the support arm is recessed relative to the ridge.

In some embodiments, the spindle axis is perpendicular to the output shaft axis. The transmission includes a gear set that connects the output shaft to the spindle. The gear set includes the rotatable element of the transmission in the form of driven gear that is fixed relative to the spindle and is rotatable about the spindle axis. The driven gear includes a gear surface that is perpendicular to the spindle axis. The gear surface defines a recess and when the lock handle is in the second position, the pin second end is disposed in the recess such that the driven gear is prevented from rotating about the spindle axis.

In some embodiments, the pivot pin extends in a direction that is perpendicular to the output shaft axis and the spindle axis.

In some embodiments, the saw housing a main handle and an auxiliary handle. The main handle protrudes from the rear end and the auxiliary handle includes an auxiliary handle first end that is joined to a first side of the saw housing, an auxiliary handle second end that is joined to a second side of the saw housing, and an auxiliary handle midportion that is disposed between the auxiliary handle first end and the auxiliary handle second end. The auxiliary handle midportion overlies a third side of the saw housing.

In some embodiments, the transmission comprises an intermediate shaft that is disposed in the support arm. The intermediate shaft is rotatable about the output shaft axis and connecting the output shaft to the gear set.

In some aspects, a saw includes a saw housing. The saw housing has a front end, a rear end opposite the front end, and a protruding handle. The saw includes an electric motor disposed in the saw housing, the electric motor having an output shaft. The saw includes a battery pack disposed in the saw housing, the battery pack configured to supply power to the electric motor. In addition, the saw includes a blade drive assembly that is configured to detachably connect a cutting blade to the saw and transmit the rotational motion of the output shaft to the cutting blade when the cutting blade is connected to the saw. The blade drive assembly includes a spindle that is driven to rotate about a spindle axis via a transmission that is connected to the output shaft. The spindle transmits rotation of the output shaft to the cutting blade when the cutting blade is connected to the saw. The blade drive assembly includes a lock handle that is disposed on an outer surface of the saw housing. The lock handle is pivotable relative to the saw housing between a first, folded position and a second, unfolded position. In addition, the blade drive assembly includes a locking pin that is supported in the saw housing and in direct contact with the lock handle. The locking pin is configured to translate relative to the saw housing based on handle position. When the lock handle is in the first, folded position, the lock handle is oriented to be substantially parallel to the saw housing outer surface and protrude minimally relative to the saw housing outer surface and the locking pin is disengaged from the gear whereby the blade drive assembly is configured to permit the spindle to freely rotate about the spindle axis. In addition, when the lock handle is in the second, unfolded position, the lock handle is oriented to be substantially perpendicular to the saw housing outer surface and protrude maximally relative to the saw housing outer surface whereby the lock handle serves as a manual grip that permits a user to stabilize the saw while attaching and detaching a cutting blade, and the locking pin is engaged with the transmission whereby the blade drive assembly is configured to prevent rotation of the spindle about the spindle axis.

In some embodiments, when the lock handle is in the first position, a ridge that protrudes from an outer surface of the saw housing partially surrounds the lock handle.

In some embodiments, when the lock handle is in the first position, a surface of the lock handle that faces away from the support arm is recessed with respect to the ridge.

In some embodiments, the saw includes a spring that surrounds the locking pin and biases the locking pin against the lock handle.

In some embodiments, the lock handle second end defines a curved cam surface.

In some embodiments, the locking pin is biased against the lock handle via an elastic member such that the locking pin first end directly contacts the cam surface.

In some embodiments, the cam surface is shaped and dimensioned so that when the lock handle is in the first position, the pin second end is spaced apart from the driven gear, and when the lock handle is in the second position, the pin second end is engaged with a recess of the gear.

### BRIEF DESCRIPTION OF THE FIGURES

Fig. 1 is a perspective view of a first side of a cut-off saw.
Fig. 2 is a perspective view of a second side of the cut-off saw.
Fig. 3 is a cross-sectional view of the cut-off saw as seen along the support arm of the cut-off saw.
Fig. 4 is a cross-sectional view of the cut-off saw as seen along a longitudinal midline of the cut-off saw.
Fig. 5 is a side view of the cut-off saw.
Fig. 6 is a cross-sectional view of the cut-off saw as seen along line 6--6 of Fig. 5.
Fig. 7 is an enlarged view of the portion of the cut-off saw of Fig. 6 enclosed in broken lines.
Fig. 8 is an exploded view of the blade connection assembly.
Fig. 9 is a perspective view of a schematic illustration of the driven gear of the gear set.
Fig. 10 is a cross-sectional view of the distal end of the support arm.
Fig. 11 is a side perspective view of a distal end of the support arm with the lock handle omitted.
Fig. 12 is a top perspective view of the lock handle of the spindle lock assembly.
Fig. 13 is a bottom perspective view of the lock handle.
Fig. 14 is a top perspective view of the isolated spindle lock assembly shown with reference to the driven gear and spindle.
Fig. 15 is a bottom perspective view of the isolated spindle lock assembly.

### DETAILED DESCRIPTION

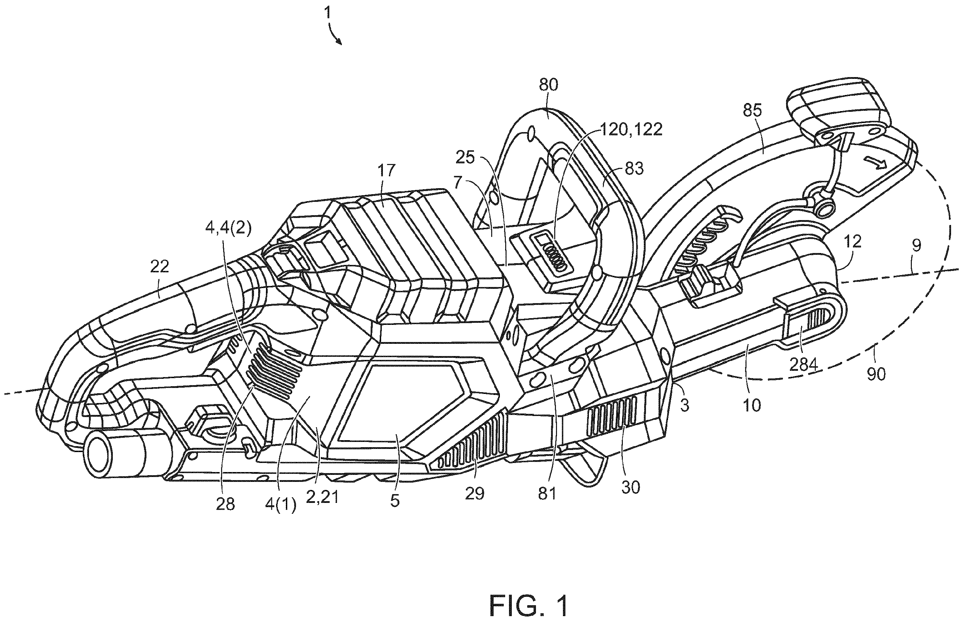

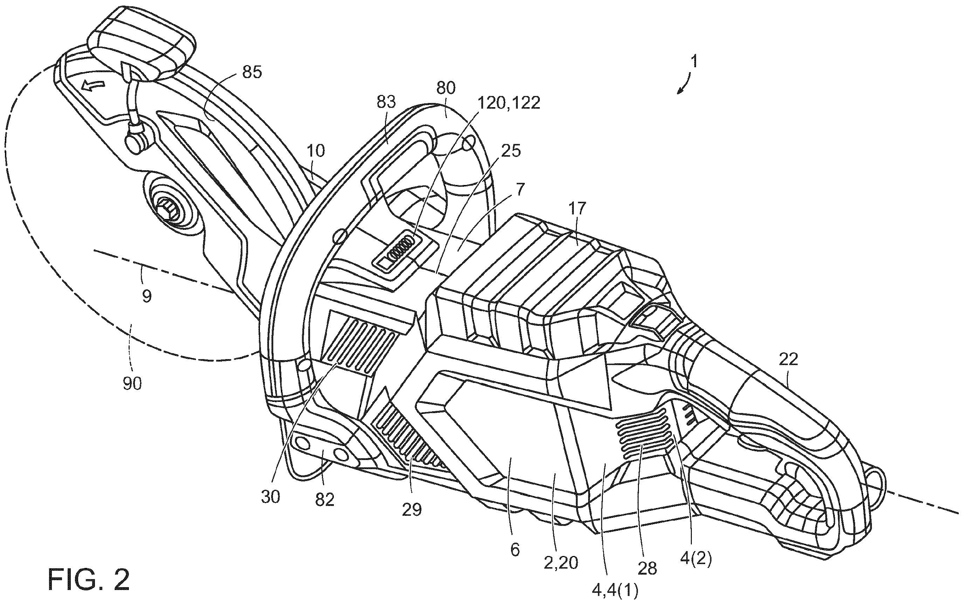

Referring to Figs. 1-5, a cut-off saw 1 is a hand-held power tool that is configured to support and drive for rotation a cutting blade 90. The cutting blade 90 is circular and may be a segmented blade, an abrasive disk, or any other rotatable element capable of removing material from a workpiece. In some embodiments, the cutting blade 90 may have an outer diameter that is in a range of eight to fourteen inches. For example, the cutting blade 90 may have a nine inch diameter. The cut-off saw 1 includes a saw housing 2 that encloses an electric motor 101 that is configured to drive the cutting blade 90, a battery pack 116 that is configured to supply power to the electric motor 101, a printed circuit board assembly (PCBA) 112 that supports control electronics including a controller (not shown), and other saw components as will be described in detail below. The saw housing 2 includes a main handle 22 that protrudes from a rear end 4 of the saw housing 2, and a support arm 10 that protrudes from a front end 3 of the saw housing 2 in a direction opposite that of the main handle 22.

A blade drive assembly 200 is housed within the hollow support arm 10. The blade drive assembly 200 is configured to detachably connect the cutting blade 90 to the support arm distal end 12 and transmit a rotational motion of an output shaft 102 of the electric motor 101 to the cutting blade 90 when the cutting blade 90 is connected to the cut-off saw 1. The blade drive assembly 200 includes a blade lock handle 284 that is configured to lock the blade drive assembly 200 so that the cutting blade 90 can be attached to or removed from the cut-off saw 1. The lock handle 284 may be pivoted into an orientation in which the lock handle 284 also serves as handle that permits the user to more easily control a position of the cut-off saw during cutting blade attachment and detachment. Details of the blade drive assembly 200 including the lock handle 284 will also be described in detail below.

The saw housing 2 is a clamshell housing having left and right cooperating half shells 20, 21 that are joined along a parting line 25 that extends from the front end 3 to the rear end 4. The saw housing 2 is elongated along a housing longitudinal axis 9 that is parallel to the parting line 25 and extends through the opposed front and rear ends 3, 4. The saw housing 2 has four sides that extend between the front end 3 and the rear end 4, including a first side 5, a second side 6, a third side 7 and a fourth side 8. When the cut-off saw 1 is oriented as shown in Fig. 1, the first side 5 and the second side 6 provide the lateral, or side, surfaces of the saw housing 2. In addition, the third side 7 provides a top surface and the fourth side 8 provides a bottom surface. The fourth side 8 is substantially parallel to the housing longitudinal axis 9. As used herein, the term "substantially parallel" refers to the exact state as well as minor variations due to manufacturing and assembly variations. Thus, the fourth side 8 may be exactly parallel to the housing longitudinal axis 9 or may be slightly angled relative to the housing longitudinal axis 9, for example as much as plus or minus five degrees. The first side 5, the second side 6, the third side 7, the fourth side 8, the front end 3 and the rear end 4 cooperate to define an interior space 18 of the saw housing 2, which is separated into compartments 18(1), 18(2) via internal wall structures.

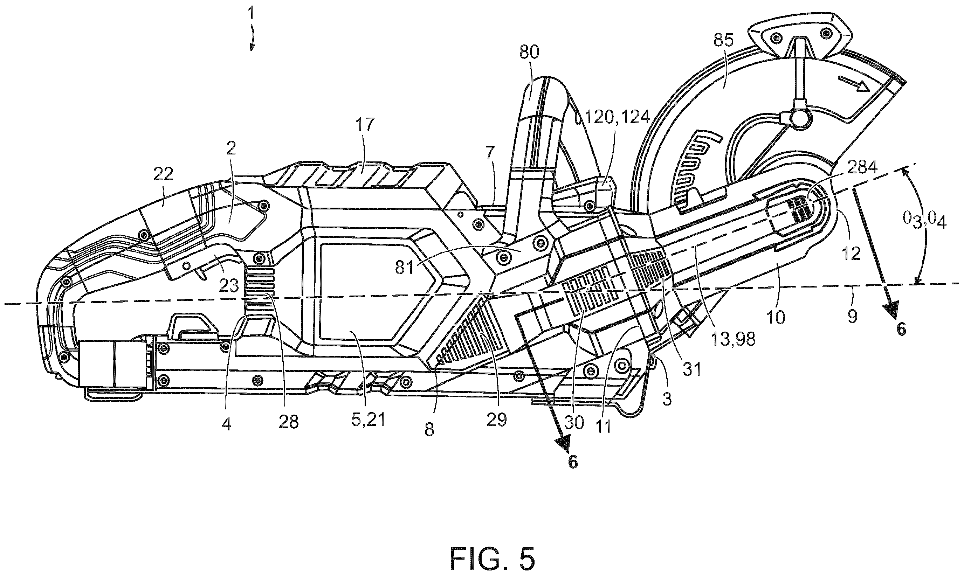

The right side half shell 21 includes the support arm 10 that protrudes from the front end 3 of the saw housing 2 in a direction opposite that of the main handle 22. The support arm 10 is a hollow, elongated structure that includes a proximal end 11 that is joined to or integral with the front end 3, and a distal end 12 that is opposite the proximal end 11 and supports the cutting blade 90. The support arm 10 includes a support arm axis 13 that extends between the proximal and distal ends 11, 12. Although the proximal end 11 joins the front end 3 at a mid-height of the saw housing 2, the distal end 12 resides above the proximal end 11 such that the support arm axis 13 is angled relative to the saw housing longitudinal axis 9. In particular, as seen in a top view of the cut-off saw 1 (Fig. 1), the support arm axis 13 extends outward from the front end 3 in parallel to the housing longitudinal axis 9. In addition, as seen in a side view of the cut-off saw 1 (Fig. 5), the support arm axis 13 extends at an acute third angle θ3 relative to the housing longitudinal axis 9. In the illustrated embodiment, the third angle θ3 is approximately thirty degrees, but is not limited to this angle.

In the illustrated embodiment, the cut-off saw 1 also includes an auxiliary handle 80 that is connected to the saw housing 2 between the front and rear ends 3, 4. The main handle 22 and the auxiliary handle 80 provide grip areas to facilitate two-handed operation of the cut-off saw 1. The auxiliary handle 80 is a curved bar that wraps around three sides of the cut-off saw 1. In particular, the auxiliary handle 80 includes an auxiliary handle first end 81 that is joined to the saw housing first side 5 (e.g., one lateral side of the saw housing 2) and an auxiliary handle second end 82 that is joined to the saw housing second side 6 (e.g., the opposed lateral side of the saw housing 2). A mid-portion 83 of the auxiliary handle 80 is disposed between the auxiliary handle first and second ends 81, 82 and overlies the saw housing third side 7 (e.g., a top side of the saw housing 2). The auxiliary handle first and second ends 81, 82 are joined to the sides 5, 6 of the saw housing 2 at a location that is longitudinally disposed between the housing side inlet opening 29 and the housing side outlet opening 30. The auxiliary handle first end 81 is joined to the first side 5 of the saw housing 2 at a location that is closer to the third side 7 than to the fourth side 8, and the auxiliary handle second end is joined to the second side 6 of the saw housing 2 at a location that is closer to the fourth side 8 than the third side 7.

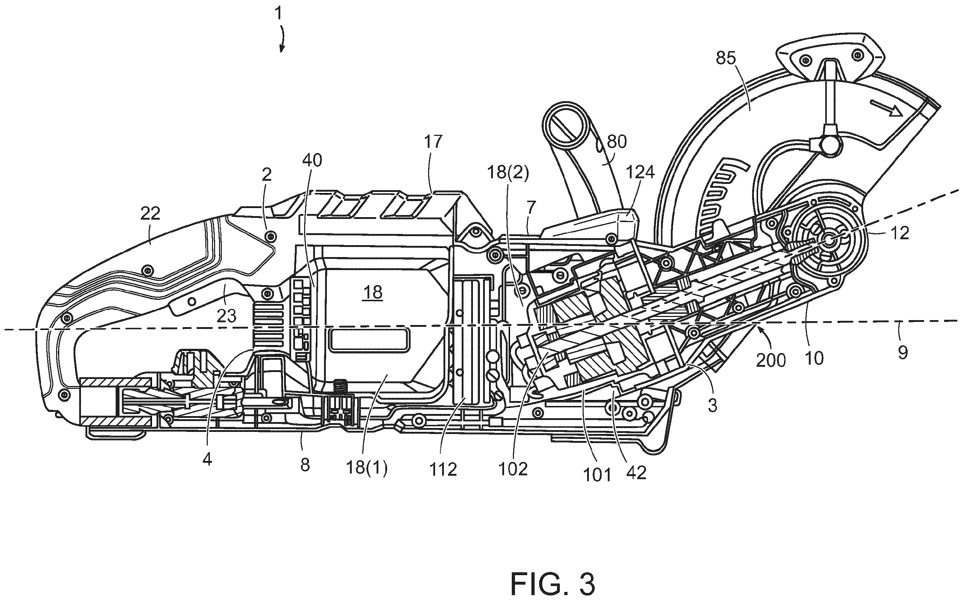

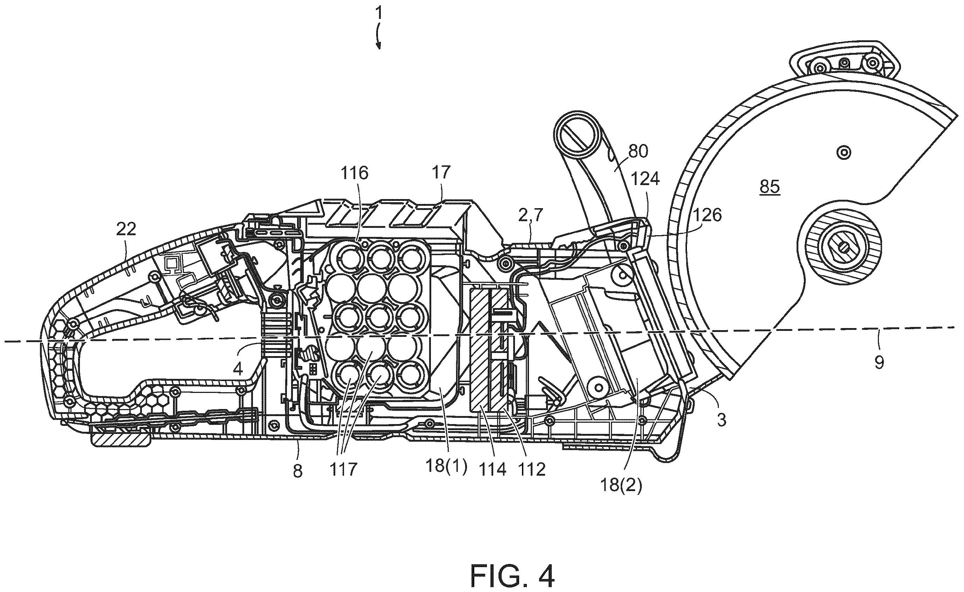

Referring to Figs. 3 and 4, the battery pack 116 is disposed in the first compartment 18(1) and is detachably connected to a battery mount that is located inside the first compartment 18(1). The battery mount mechanically interconnects the battery pack 116 to the first compartment 18(1). The battery mount also includes electrical terminals (not shown) that electrically connect with corresponding electrical terminals on the battery pack 116 during insertion of the battery pack 116 into the first compartment 18(1). The illustrated battery pack 116 is a power tool battery pack having a plurality of rechargeable battery cells 117. The battery cells 117 may be lithium-based or have any other suitable chemistry.

The electric motor 101 is disposed in the second compartment 18(2). The electric motor 101 may be a brushless direct-current motor but is not limited to this type of motor. Operation of the motor 101 is controlled by the controller.

The output shaft 102 of the motor 101 protrudes from the motor housing first end 103(2) and rotates about an output shaft axis 98 that is aligned with the support arm axis 13. The output shaft axis 98 extends toward the front end 3 in parallel to the housing longitudinal axis 9. In addition, as seen in a side view of the cut-off saw 1 (Fig. 5), the output shaft axis 98 extends at an acute fourth angle θ4 relative to the housing longitudinal axis 9. In the illustrated embodiment, the fourth angle θ4 is approximately thirty degrees to correspond to the angle of the support arm axis 13.

A motor fan 100 is mounted on the output shaft 102 at a location between the electric motor 101 and the housing front end 3. The motor fan 100 rotates in concert with the output shaft 102 and draws air through a housing 103 of the motor 101.

The PCBA 112 is a completed printed circuit board assembly that includes the PCB and contains the controller and other electronic components needed to make the board function as required. The PCBA 112 is mounted on a heat sink 114. The PCBA 112 and the heat sink 114 are supported withing the saw housing 2 in such a way that the PCB resides in a plane that is perpendicular to the housing longitudinal axis 9. The heat sink 114 is a thermally conductive plate that is joined to the rear-facing surface of the PCBA 112. The heat sink 114 includes cooling fins that extend in a direction parallel to the first and second (lateral) sides 5, 6 and protrude toward the rear end 3.

In the illustrated embodiment, the motor 101 and the battery pack 116 together form a high power battery-powered system. For example, in some embodiments, the motor 101 and the battery pack 116 are operable to produce a high power output. For example, the motor 101 and the battery pack 116 may produce a peak power of 1800 watts (W) to 2400 W or more (2.4 horsepower (hp) to 3.0 hp or more). This power output is equal to or greater than the power output of some single-cylinder internal combustion engines typically used in cut-off saws.

A trigger 23 for operating the cut-off saw 1 is located on the main handle 22. The trigger 23 is configured so that a user may depress the trigger 23 using fingers of the hand which grips the main handle 22, whereby the electric motor 101 is actuated.

The cut-off saw 1 includes a human machine interface (HMI) 120 to assist a user in operating the cut-off saw 1. In the illustrated embodiment, the HMI includes a battery charge level display 122 surrounded by a sturdy protective frame 124. The HMI 120 is positioned on the saw housing 2 within a line of sight of a user during operation of the cut-off saw 1. For example, the HMI 120 may be positioned on the third side (top) of the saw housing 2 between the battery cover (detachable lid) 17 and the front end 3.

In other embodiments, the HMI may alternatively, or additionally, include a liquid crystal display (LCD) screen that is surrounded by the sturdy protective frame 124. The LDC screen may display the battery charge level and/or other information of interest to the saw user, including but not limited to indication of an amount of power being used by the cut-off saw 1 during operation (i.e., an amount of current being drawn from the battery pack 116 or other operational information. In other embodiments, the HMI 120 may be positioned on other locations on the saw housing 2.

The cut-off saw 1 also includes a light source 126 provided on a forward-facing surface of the protective frame 124. The light source 126 may include one or more light emitting diodes (LEDs) that are arranged to illuminate the work area in front of the saw and/or a work piece disposed in this area.

Referring to Figs. 3 and 6-7, the support arm 10 houses a blade drive assembly 200. The blade drive assembly 200 is a belt-free drive system that includes four subassemblies 202, 222, 262, 282 that cooperate to transmit the rotational output of the electric motor 101 to the cutting blade 90. The first subassembly is an intermediate drive assembly 202 disposed in the support arm 10 between the proximal and distal ends 11, 12. The second, third and fourth subassemblies 222, 262, 282 are disposed in the support arm distal end 12. The second subassembly is a blade connection assembly 262 that is used to connect the cutting blade 90 to the support arm distal end 12. The third subassembly is a gear set 222 that connects the intermediate drive assembly 202 to the blade connection assembly 262 and reduces the rotational speed of the motor output shaft 102. The fourth subassembly is a spindle lock assembly 282 that is operable to selectively engage with the gear set 222 to prevent movement of the gear set during attachment and detachment of the cutting blade 90. Each of the four subassemblies 202, 222, 262, 282 will now be described in detail.

The intermediate drive assembly 202 provides a mechanical connection between the motor output shaft 102 and the gear set 222. The intermediate drive assembly 202 includes an elongated intermediate shaft 207 and a shaft coupling 203. The shaft coupling 203 joins the motor output shaft 102 to one end of the intermediate shaft 207 via a driver pinion 204 that is interposed between the one end and the shaft coupling 203. As a result, the intermediate shaft 207 rotates coaxially with the motor output shaft 102 about the output shaft axis 98. A beveled pinion gear 209 is disposed on an opposite end of the intermediate shaft 207. The pinion gear 209, which joins the intermediate drive assembly 202 to the gear set 222, is retained on the intermediate shaft 207 via a nut 210. The intermediate shaft 207 is supported at each end with respect to the support arm via bearings 206, 208.

The gear set 222 together with the intermediate drive assembly 202 provides a transmission 216 that transmits rotational motion of the motor output shaft 102 to the blade connection assembly 262. The gear set 222 includes a spindle 233 that is rotatable about a spindle axis 235 that extends in a direction that is perpendicular to the support arm axis 13. The first end 233(1) of the spindle 233 is supported relative to the support arm 10 via a needle roller bearing 223 and a midportion 233(3) of the spindle 233 is supported relative to the support arm 10 via a ball bearing 227. The spindle includes a second end 233(2) that is opposite the first end 233(1). The spindle second end 233(2) protrudes from the support arm 10 in a lateral direction, e.g., it protrudes toward a left side of the cut off saw 1. The end face of the spindle second end 233(2) includes a threaded blind bore 233(11) that is configured to engage the threads (not shown) of a bolt 268 of the blade connection assembly 262.

In addition, the spindle 233 has a non-uniform diameter. In particular, the spindle 233 has a maximum diameter portion 233(6) that includes the spindle second end 233(2), a minimum diameter portion 233(8) that includes the spindle first end 233(1) and an intermediate diameter portion 233(7) that includes the spindle midportion 233(3). In addition, the spindle 233 includes a first shoulder 233(9) at the transition between the minimum diameter portion and the intermediate diameter portion, and a second shoulder 233(10) at the transition between the intermediate diameter portion and the maximum diameter portion.

The outer circumferential surface of the spindle maximum diameter portion 233(6) includes a pair of opposed spindle flats 233(4) that are used to engage corresponding flange flats 264(3), 266(3) provided on an inner circumferential surface of each of a pair of flange plates 264, 266 of the blade connection assembly 262. The spindle 233 includes an annular protrusion 233(5) that is disposed in the spindle maximum diameter portion 233(6) at a location that is closer to the second shoulder 233(10) than the spindle second end 233(2).

The gear set 222 includes a beveled driven gear 225 that surrounds and is connected to the spindle intermediate diameter portion 233(7) via, for example, internal splines (not shown). As a result, driven gear 225 is rotatable about the spindle axis 235 in concert with the spindle 233. External teeth (not shown) of the driven gear 225 engage with corresponding teeth (not shown) of the bevel pinion gear 209 whereby the driven gear 225 is driven by the intermediate shaft 207. The driven gear 225 is retained adjacent to the bearing 227 via a circlip 224 that surrounds the spindle 233.

The driven gear 225 has a first gear face 225(1) that faces away from the cutting blade 90 and a second gear face 225(2) opposite the first gear face 225(1) and that faces the cutting blade 90. The first gear face 225(1) includes at least one recess, for example a blind hole 225(3) that is dimensioned to receive a locking pin 294 that is part of the spindle lock assembly 282, as discussed further below. In the illustrated embodiment, the first gear face 225(1) includes three blind holes 225(3) that are equidistantly spaced apart along a circle that surrounds the spindle 233. The gear second face 225(2) defines a collar portion 225(4) that protrudes in a direction parallel to the spindle axis 235. An inner surface of the collar portion 225(4) confronts an outer surface of the spindle 233.

The ball bearing 227 that surrounds the spindle intermediate diameter portion 233(7) is disposed between an end face 225(5) of the bevel gear collar portion 225(4) and the spindle second shoulder 233(10). More specifically, the ball bearing 227 is retained against the spindle second shoulder 233(10) via a circlip 226. The ball bearing 227 supports the spindle 233 with respect to a gear case cover 230, an inner surface of which includes a groove that receives the circlip 226. An annular seal 232 is disposed between a cutting blade-facing surface of the ball bearing 227 and the spindle annular protrusion 233(5).

A retaining plate 239 surrounds the spindle annular protrusion 233(5) and is secured to an end face 230(1) of the gear case cover 230 via fasteners. The retaining plate 239 has a larger diameter than the gear case cover end face 230(1), and an inner periphery of the blade guard 85 is clamped between a surface 239(1) of the retaining plate 239 and a surface 230(2) of the gear case cover 230 via intermediate blade guard O-rings 236, 237 in such a way that the blade guard 85 is rotatable relative to the gear case cover 230 and the retaining plate 239. The blade guard O rings 236, 237 and another O-ring 229 that is disposed between the gear case cover 230 and an inner surface of the support arm 10 cooperate to prevent moisture and debris from entering the gear set 222.

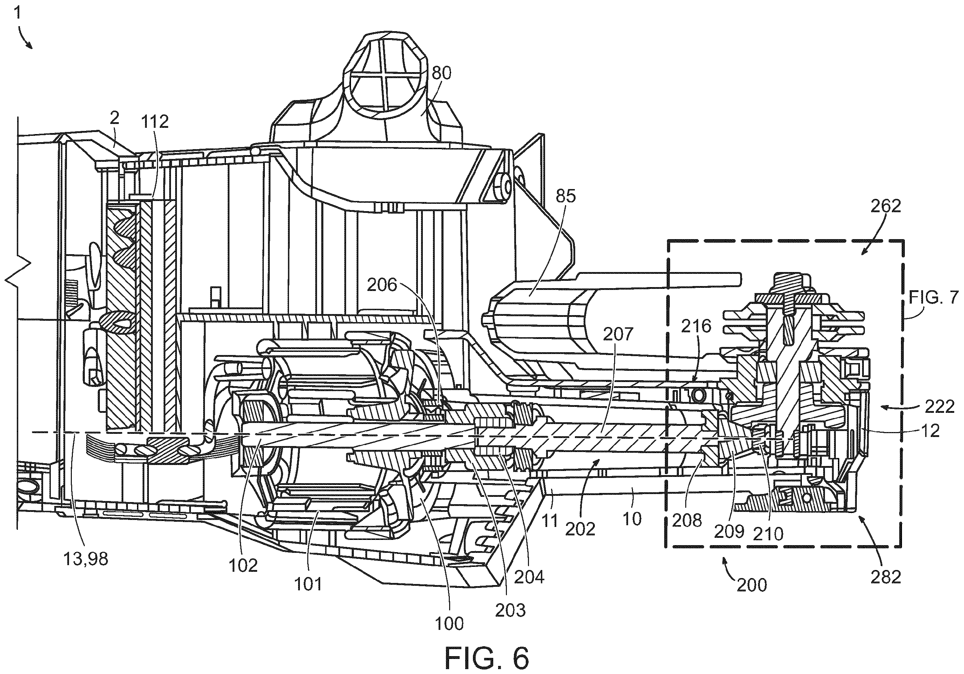

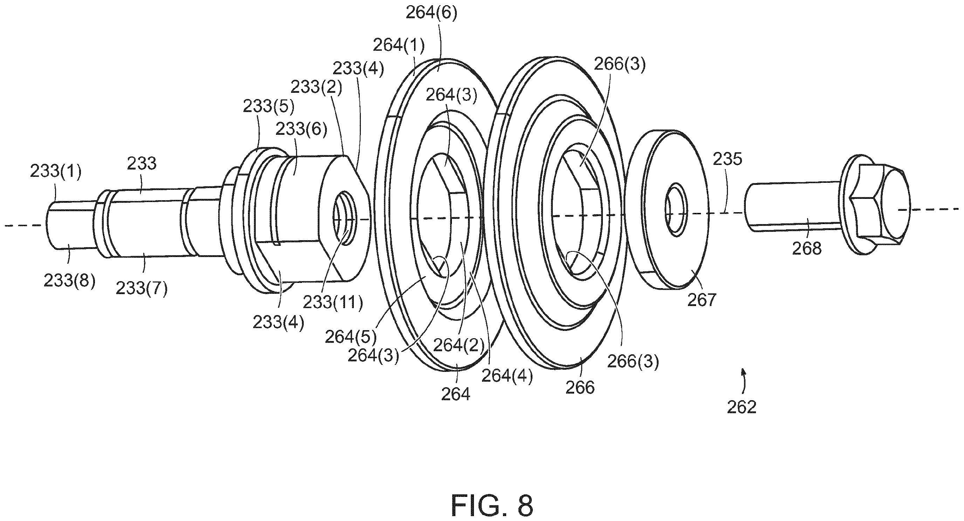

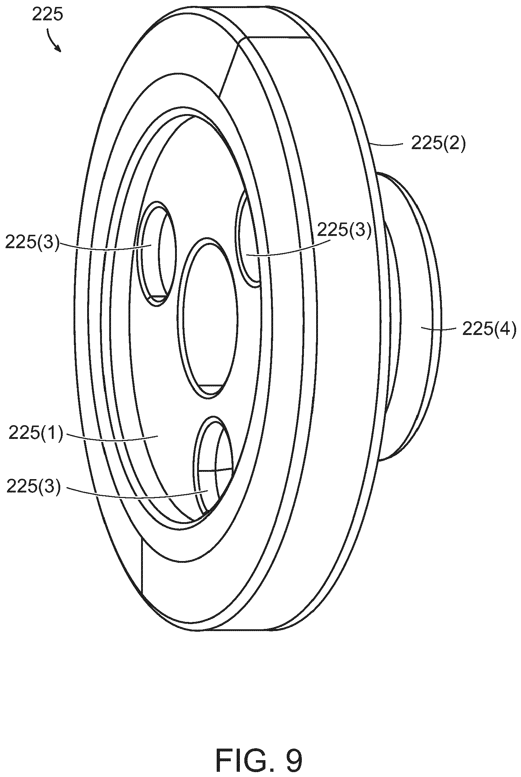

Referring to Figs. 6-9, the blade connection assembly 262 is supported on the spindle second end 233(2). The blade connection assembly 262 includes the pair of flange plates 264, 266, which consist of an inner flange plate 264 that is retained against a side of the spindle annular protrusion 233(5) via a circlip 265 and an outer flange plate 266. Each of the inner and outer flanges 264, 266 have substantially the same shape and dimensions, so only the inner flange plate 264 will be described in detail.

The inner flange plate 264 is a thin plate having a circular outer peripheral edge 264(1) and a central opening 264(2). The central opening 264(2) is configured to have the same shape and dimensions as the spindle maximum diameter portion 233(6), which is received therethrough in a clearance fit. In particular, the central opening 264(2) includes opposed flange flats 264(3) that are configured to engage with the spindle flats 233(4) formed on the spindle maximum diameter portion 233(6). By this configuration, each of the inner and outer flanges 264, 266 rotate in concert with the spindle 233.

When the inner flange plate 264 is seen in a side view, the central portion 264(4) including the central opening 264(2) is offset relative to the outer peripheral edge 264(1). As a result, the inner flange plate 264 has a central concavity 264(5) that is surrounded by a rim 264(6). The rim 264(6) is parallel to the central portion 264(4).

In use, the inner flange plate 264 is disposed on the spindle maximum diameter portion 233(6) in an orientation in which the central portion 264(4) abuts the spindle annular protrusion 233(5) and the central concavity 264(5) opens facing the spindle second end 233(2). The inner flange plate 264 is retained against the spindle annular protrusion 233(5) by a circlip 265 disposed in a groove of the spindle 233. The outer flange plate 266 is disposed on the spindle maximum diameter portion 233(6) in an opposite orientation in which the central concavity 266(5) opens facing the spindle first end 233(1). By this configuration, the rims 264(6), 266(6) of the respective inner and outer flange plates 264, 266 face each other. In use, the cutting blade 90 is mounted on the spindle 233 between the respective inner and outer flange plates 264, 266. The blade connection assembly 262 includes a bolt 268 that is received in the bore 233(11) and a washer 267 that is disposed on a shank of the bolt 268. In use, the bolt 268 and washer 267 are used to retain the outer flange plate 266 on the spindle 233. With sufficient tightening of the bolt 268 in the bore 233(11), the cutting blade 90 is securely clamped between the respective rims 264(6), 266(6) of the inner and outer flange plates 264, 266 and the rotation of the spindle 233 is transferred to the cutting blade 90.

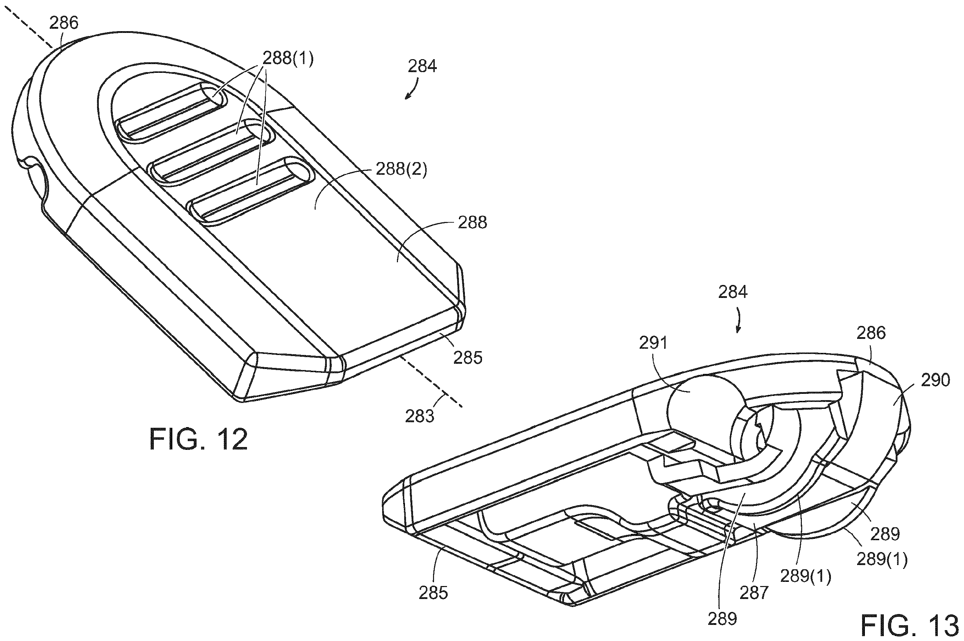

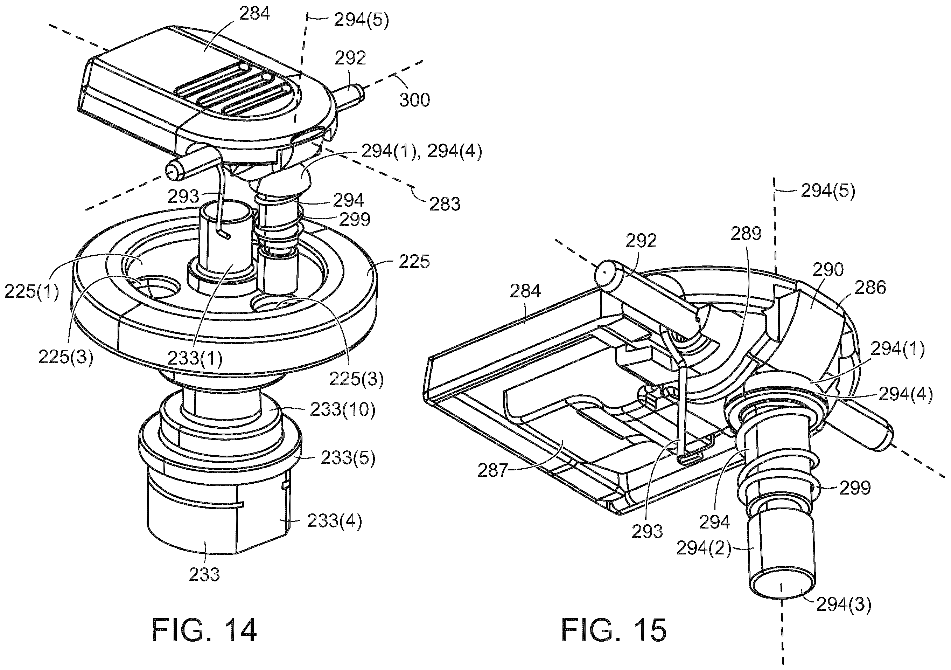

Referring to Figs. 6-7 and 10-15, the spindle lock assembly 282 is supported on the support arm 10 adjacent to the spindle first end 233(1). The spindle lock assembly 282 includes a lock handle 284 that is pivotably mounted on the outer surface of the support arm 10 at the support arm distal end 12. The support arm 10 includes a curved ridge 14 that protrudes from outer surface of the lateral side of the support arm 10. The ridge 14 is U-shaped and surrounds the lock handle on three of four sides. In some orientations of the lock handle 284, the ridge 14 protrudes to an extent that the lock handle 284 is slightly recessed with respect to the ridge 14, whereby the ridge 14 provides structural protection of the lock handle 284 from impact during saw transport or operation. The lock handle 284 is connected to the support arm 10 via a pivot pin 292 that is supported on the ridge 14. The lock handle 284 is configured to actuate a locking pin 294 for movement relative to the support arm 10, as will now be described in detail.

The lock handle 284 is a rigid plate that is shaped and dimensioned to grasped between fingers and thumb of the user's hand. The lock handle 284 overlies an outer, lateral-side surface of the support arm 10. In the illustrated embodiment, the lock handle is disposed on a side of the support arm 10 opposite the cutting blade 90. The lock handle 284 includes a handle first end 285 and a handle second end 286 opposite the handle first end 285. The lock handle 284 includes a handle longitudinal axis 283 that extends between the handle first and second ends 285, 286. In the illustrated embodiment, the lock handle 284 is elongated in a direction parallel to the handle longitudinal axis 283 but is not limited to this configuration. The lock handle 284 includes a broad handle inner surface 287 that faces the outer surface of the support arm 10. In addition, the lock handle 284 includes a broad handle outer surface 288 that is opposite the handle inner surface 287 and faces away from the support arm 10. The handle inner and outer surfaces 287, 288 extend between the handle first and second ends 285, 286.

The lock handle 284 includes a through opening 291 that is shaped and dimensioned to receive the pivot pin 292. The through opening 291 is disposed closer to the handle second end 286 than the handle first end 285. In the illustrated embodiment, through opening 291 is generally parallel to the inner and outer surfaces 287, 288 of the lock handle 284 and is perpendicular to the handle longitudinal axis 283 and the spindle axis 235.

The spindle lock assembly 282 includes the pivot pin 292 that connects the lock handle 284 the support arm 10. The pivot pin 292 is disposed in the through opening 291. The pivot pin 292 is of sufficient length that opposed ends of the pivot pin 292 protrude from opposed sides of the lock handle 284 and are supported on opposed portions of the support arm ridge 14. In use, the lock handle 284 pivots about the pivot pin 292, whereby the pivot pin 292 defines a pivot pin rotational axis 300.

The spindle lock assembly 282 includes a torsion spring 293 which is configured to bias the lock handle 284 toward a first, folded orientation relative to the support arm 10. The torsion spring 293 encircles the pivot pin 292 and opposed ends of the torsion spring 293 are secured to the lock handle 284 and the support arm 10, respectively.

The lock handle 284 includes a pair of bearing ridges 289 that protrude from the handle inner surface 287. Each bearing ridge 289 underlies the through opening 291 and is elongated in a direction parallel to the handle longitudinal axis 283. The bearing ridges 289 are spaced apart from each other in a direction parallel to the pivot pin rotational axis 300. Each bearing ridge 289 defines a curved bearing surface 289(1) which is supported on a correspondingly curved surface of a post 15 protruding from the support arm outer surface 10(2).

The lock handle 284 includes a cam surface 290 that is formed at the handle second end 286. The cam surface 290 is a curved, outwardly convex surface. In the illustrated embodiment, the cam surface 290 extends from the handle outer surface 288 to a location between the bearing ridges 289 on the handle inner surface 287. The cam surface 290 is configured to engage with the locking pin 294 and to drive the locking pin 294 to translate relative to the support arm 10 based on a rotational orientation of the lock handle 284 about the pivot pin rotational axis 300, as discussed in further detail below.

The handle outer surface 288 may include surface features 288(1) that enhance manual gripping. For example, the handle outer surface 288 may include channels (shown), ridges, knurling, dimpling or other features. In the illustrated embodiment, a central portion 288(2) of the handle outer surface is slightly recessed and the channels 288(1) are located in the central portion 288(2).

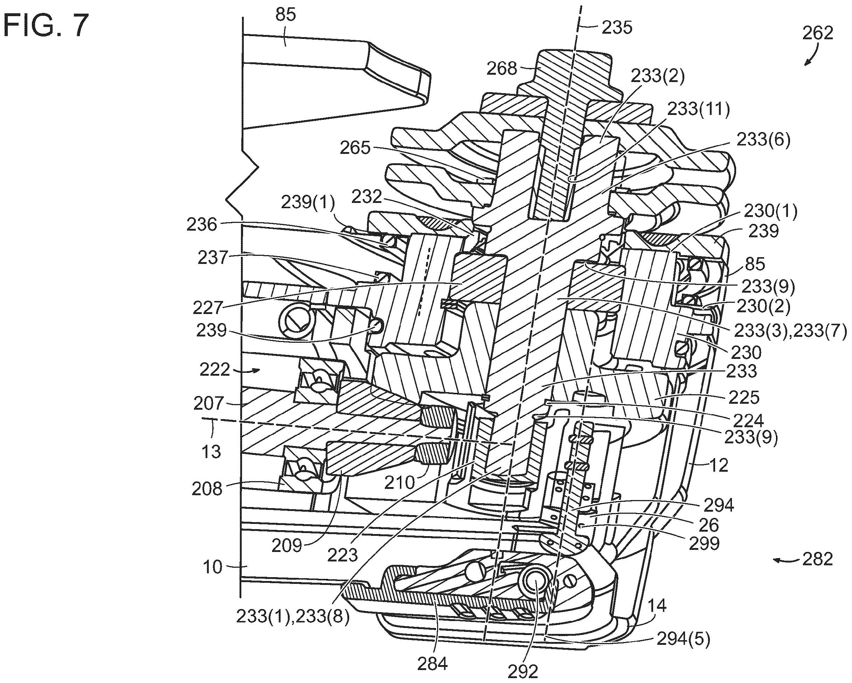

The spindle lock assembly 282 further includes the locking pin 294. The locking pin 294 includes a head 294(1) and an elongated shank 294(2) that protrudes from the head 294(1). The shank 294(2) has a terminal end 294(3) opposite the head 294(1). The surface 294(4) of the head 294(1) on a side opposite the shank 294(2) is convex and curved. In the illustrated embodiment, for example, the surface 294(4) has a hemispherical shape. The locking pin 294 has a longitudinal axis 294(5) that extends through the head 294(1) and the shank terminal end 294(3). The locking pin 294 is disposed within an opening 26 of the support arm 10 and is oriented so that the locking pin longitudinal axis 294(5) is parallel to and offset from the spindle axis 235 and so that the locking pin longitudinal axis 294(5) passes through the driven gear 225 at a location between spindle 233 and the bevel gear teeth (Fig. 7). In particular, in certain rotational orientations of the driven gear 225, the locking pin longitudinal axis 294(5) is aligned with a hole 225(3) of the driven gear 225. The locking pin 294 may translate within the support arm opening in a direction parallel to the longitudinal axis 294(5).

The spindle lock assembly 282 further includes a compression spring 299 that surrounds the locking pin shank 294(2). One end of the compression spring abuts the head 294(1) and an opposed end of the compression spring 299 abuts an inner surface of the support arm 10. By this configuration, the compression spring 299 applies a force to the head 294(1) of the locking pin 294 that urges the locking pin 294 against the cam surface 290 of the lock handle 284, e.g., urges the locking pin 294 out of engagement with the hole 225(3) of the driven gear 225. As a result of the spring force of the compression spring 299, the locking pin head 294(1) is maintained in direct contact with the cam surface of the lock handle 284 regardless of the orientation of the lock handle 284 about the pivot pin 292.

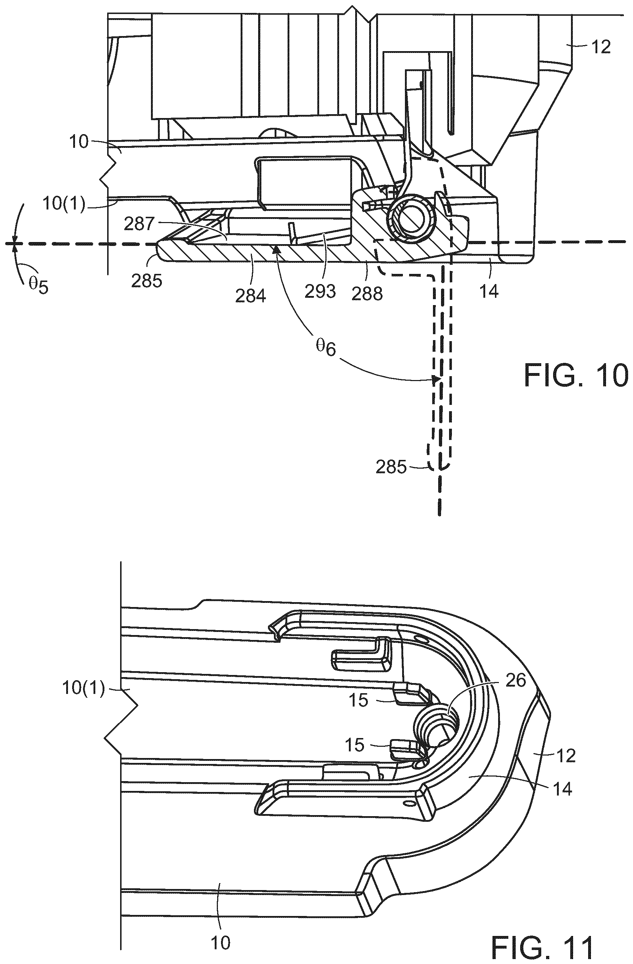

The lock handle 284 is rotatable about the pivot pin 292 between a first, folded position (Fig. 10, shown in solid lines) and a second, unfolded position (Fig. 10, shown in broken lines). When the lock handle 284 is in the first position, the handle longitudinal axis 283 is at a first handle angle θ5 relative to the support arm outer surface. In the illustrated embodiment, when the lock handle 284 is in the first position, the longitudinal axis 283 of the lock handle 284 is oriented to be substantially parallel to the outer surface 10(2) of the support arm 10. In other words, the first handle angle θ5 is zero degrees or substantially zero degrees (e.g., within plus or minus five degrees of being parallel to) the support arm outer surface 10(2). In the first position, the lock handle 284 is stowed within the area surrounded by the ridge 14.

The cam surface 290 is curvedly shaped so that when the lock handle 284 is in the first position, the portion of the cam surface 290 that contacts the locking pin 294 protrudes minimally toward the support arm 10. As a result, when the lock handle 284 is in the first position, the pin terminal end 294(3) is spaced apart from the driven gear 225, e.g., the pin terminal end 294(3) is disengaged from the hole 225(3) provided in the first gear face 225(1). Since the locking pin 294 is disengaged from the hole 225(3), the spindle 233 is permitted to freely rotate about the spindle axis 235.

When the lock handle 284 is in the second position, the handle longitudinal axis 283 is at a second handle angle θ6 relative to the support arm outer surface 10(2). In the illustrated embodiment, when the lock handle 284 is in the second position, the longitudinal axis 283 of the lock handle 284 is oriented to be substantially perpendicular to the outer surface 10(2) of the support arm 10 such that the handle first end 285 resides outside the area surrounded by the ridge 14. In other words, the second handle angle θ6 is 90 degrees or within plus or minus five degrees of being perpendicular to the support arm outer surface 10(2). In this orientation, the lock handle 284 protrudes outward relative to the support arm 10 and serves as a manual grip or handle that permits a user to easily hold and stabilize the cut-off saw 1 during attachment or detachment of the cutting blade 90. Thus, the lock handle 284 in the second position serves as a handle and actuates the spindle lock assembly 282 that prevents rotation of the spindle 233, facilitating the attachment or detachment of the cutting blade 90 to the cut-off saw 1.

When the lock handle 284 is in the second position, the portion of the cam surface 290 that contacts the locking pin 294 protrudes maximally toward the support arm 10. As a result, when the lock handle 284 is in the second position, the locking pin 294 is driven by the cam surface 290 toward the driven gear 225 and the pin terminal end 294(3) becomes engaged with one of the holes 225(3). When the locking pin 294 is engaged with the hole 225(3), the driven gear 225 and thus the spindle 233 are prevented from rotating about the spindle axis 235.

Selective illustrative embodiments of the cut-off saw are described above in some detail. Only structures considered necessary for clarifying the cut-off saw have been described herein. Other conventional structures, and those of ancillary and auxiliary components of the cut-off saw are assumed to be known and understood by those skilled in the art. Moreover, while a working example of the cut-off saw has been described above, the cut-off saw is not limited to the working example described above, but various design alterations may be carried out without departing from the cut-off saw as set forth in the claims.

## Claims

1. A saw, comprising:
a saw housing, the saw housing including a front end, a rear end opposite the front end and a hollow support arm that protrudes outward from the front end, the support arm including a proximal end that adjoins the front end and a distal end that is opposite the proximal end;
an electric motor disposed in the saw housing, the electric motor including an output shaft that is rotatable about an output shaft axis;
a battery pack disposed in the saw housing, the battery pack configured to supply power to the electric motor; and
a blade drive assembly disposed in the support arm, the blade drive assembly configured to detachably connect a cutting blade to the distal end of the support arm and transmit a rotational motion of the output shaft to the cutting blade when the cutting blade is connected to the saw,
the blade drive assembly including
a spindle that is connected to the output shaft and is rotatable about a spindle axis, the spindle including a spindle first end that is supported for rotation by the support arm, and a spindle second end that protrudes outward from the support arm;
a transmission that connects the output shaft to the spindle;
a blade connection subassembly disposed on the spindle second end, the blade connection subassembly configured to detachably secure a cutting blade to the spindle second end;
a lock handle that overlies an outer surface of the support arm, the lock handle comprising a handle first end, a handle second end opposite the handle first end, and a handle longitudinal axis that extends between the handle first end and the handle second end, the lock handle being connected to the support arm via a pivot pin that is disposed closer to the handle second end than the handle first end; and
a locking pin that is disposed within an opening of the support arm, the locking pin being translatable within the opening relative to the support arm, the locking pin including a pin first end that directly contacts the lock handle and a pin second end that faces a rotatable element of the transmission,
wherein
the lock handle is rotatable about the pivot pin relative to the support arm between a first position in which the handle longitudinal axis is at a first angle relative to the support arm outer surface and a second position in which the handle longitudinal axis is at a second angle relative to the support arm outer surface, the second angle being greater than the first angle,
the locking pin is driven by the lock handle to translate relative to the support arm upon rotation of the lock handle about the pivot pin,
when the lock handle is in the first position, the pin second end is spaced apart from the rotatable element of the transmission such that the rotatable element of the transmission is free to rotate, and
when the lock handle is in the second position, the pin second end engages with the rotatable element of the transmission such that the rotatable element of the transmission is prevented from rotating.

2. The saw of claim 1, comprising a spring that surrounds the locking pin and biases the locking pin against the lock handle.

3. The saw of claim 1, wherein the lock handle second end defines a curved cam surface.

4. The saw of claim 3, wherein the locking pin is biased against the lock handle via an elastic member such that the locking pin first end directly contacts the cam surface.

5. The saw of claim 4, wherein the cam surface is shaped so that when the lock handle is in the first position, the pin second end is spaced apart from the rotatable element of the transmission, and when the lock handle is in the second position, the pin second end is engaged with the rotatable element of the transmission.

6. The saw of claim 1, wherein the locking pin is movable along a locking pin axis that is perpendicular to a rotational axis of the pivot pin.

7. The saw of claim 1, wherein a curved ridge protrudes from an outer surface of the support arm, the ridge partially surrounding the lock handle.

8. The saw of claim 7, wherein when the lock handle is in the first position, a surface of the lock handle that faces away from the support arm is recessed relative to the ridge.

9. The saw of claim 1, wherein
the spindle axis is perpendicular to the output shaft axis;
the transmission includes a gear set that connects the output shaft to the spindle, the gear set including the rotatable element of the transmission in the form of driven gear that is fixed relative to the spindle and is rotatable about the spindle axis;
the driven gear including a gear surface that is perpendicular to the spindle axis,
the gear surface defines a recess, and
when the lock handle is in the second position, the pin second end is disposed in the recess such that the driven gear is prevented from rotating about the spindle axis.

10. The saw of claim 1, wherein the pivot pin extends in a direction that is perpendicular to the output shaft axis and the spindle axis.

11. The saw of claim 1, wherein the saw housing comprises:
a main handle that protrudes from the rear end; and
an auxiliary handle, the auxiliary handle including
an auxiliary handle first end that is joined to a first side of the saw housing,
an auxiliary handle second end that is joined to a second side of the saw housing, and
an auxiliary handle midportion that is disposed between the auxiliary handle first end and the auxiliary handle second end, the auxiliary handle midportion overlying a third side of the saw housing.

12. The saw of claim 1, wherein the transmission comprises an intermediate shaft that is disposed in the support arm, the intermediate shaft being rotatable about the output shaft axis and connecting the output shaft to the gear set.

13. A saw comprising:
a saw housing, the saw housing including a front end, a rear end opposite the front end, and a protruding handle;
an electric motor disposed in the saw housing, the electric motor including an output shaft;
a battery pack disposed in the saw housing, the battery pack configured to supply power to the electric motor; and
a blade drive assembly that is configured to detachably connect a cutting blade to the saw and transmit the rotational motion of the output shaft to the cutting blade when the cutting blade is connected to the saw, the blade drive assembly including
a spindle that is driven to rotate about a spindle axis via a transmission that is connected to the output shaft, the spindle transmitting rotation of the output shaft to the cutting blade when the cutting blade is connected to the saw,
a lock handle that is disposed on an outer surface of the saw housing, the lock handle being pivotable relative to the saw housing between a first, folded position and a second, unfolded position, and
a locking pin that is supported in the saw housing and in direct contact with the lock handle, the locking pin configured to translate relative to the saw housing based on handle position,
wherein:
when the lock handle is in the first, folded position,
the lock handle is oriented to be substantially parallel to the saw housing outer surface and protrude minimally relative to the saw housing outer surface, and
the locking pin is disengaged from the gear whereby the blade drive assembly is configured to permit the spindle to freely rotate about the spindle axis, and
when the lock handle is in the second, unfolded position,
the lock handle is oriented to be substantially perpendicular to the saw housing outer surface and protrude maximally relative to the saw housing outer surface whereby the lock handle serves as a manual grip that permits a user to stabilize the saw while attaching and detaching a cutting blade, and
the locking pin is engaged with the transmission whereby the blade drive assembly is configured to prevent rotation of the spindle about the spindle axis.

14. The saw of claim 13, wherein when the lock handle is in the first position, a ridge that protrudes from an outer surface of the saw housing partially surrounds the lock handle.

15. The saw of claim 14, wherein when the lock handle is in the first position, a surface of the lock handle that faces away from the support arm is recessed with respect to the ridge.

16. The saw of claim 13, comprising a spring that surrounds the locking pin and biases the locking pin against the lock handle.

17. The saw of claim 13, wherein the lock handle second end defines a curved cam surface.

18. The saw of claim 17, wherein the locking pin is biased against the lock handle via an elastic member such that the locking pin first end directly contacts the cam surface.

19. The saw of claim 18, wherein the cam surface is shaped and dimensioned so that
when the lock handle is in the first position, the pin second end is spaced apart from the driven gear, and
when the lock handle is in the second position, the pin second end is engaged with a recess of the gear.
